# EUROPÄISCHE PATENTSCHRIFT

(11) **EP 4 143 808 B1**
(45) Veröffentlichungstag und Bekanntmachung des Hinweises auf die Patenterteilung: **26.03.2025**
(21) Anmeldenummer: 21746350.4
(22) Anmeldetag: 06.07.2021
(51) Int. Cl.: G08G 1/16, G08G 1/042, B60W 30/12

(54) **ASSISTENZSYSTEM FÜR EIN STRASSENFAHRZEUG**
ASSISTANCE SYSTEM FOR A ROAD VEHICLE
SYSTÈME D'ASSISTANCE POUR UN VÉHICULE ROUTIER

(30) Priorität: 22.07.2020 DE 102020209258
(43) Veröffentlichungstag der Anmeldung: 08.03.2023
(73) Patentinhaber: Siemens Mobility GmbH, 81739 München (DE)
(72) Erfinder: MOLTHAN, Helge, 83075 Bad Feilnbach (DE); SEISENBERGER, Claus, 84181 Neufrannhofen (DE)
(74) Vertreter: Siemens Patent Attorneys
(86) Internationale Anmeldenummer: PCT/EP2021/068654
(87) Internationale Veröffentlichungsnummer: WO 2022/017783

(56) Entgegenhaltungen:
- DE-A1- 102011 076 615
- DE-A1- 19 961 449
- US-A1- 2016 082 957

## Beschreibung

Die Erfindung bezieht sich auf ein Assistenzsystem für ein auf einer Fahrbahn mit einem oder mehreren Fahrstreifen benutzbares Straßenfahrzeug, umfassend ein Positionsbestimmungssystem zur Bestimmung einer lateralen Position des Straßenfahrzeugs auf der Fahrbahn.

Der Bestimmung der lateralen Position eines Straßenfahrzeugs, insbesondere eines Personen- oder Lastkraftwagens, kommt für viele Assistenzsysteme eine zentrale Bedeutung zu. Sowohl für Spurhaltesysteme als auch für Lenkbeeinflussungssysteme von teilautomatisierten oder autonomen Straßenfahrzeugen ist es entscheidend zu wissen, auf welchem Fahrstreifen einer mehrstreifigen Fahrbahn oder wo innerhalb eines Fahrstreifens sich das Straßenfahrzeug gerade befindet.

DE 10 2011 076615 A1 offenbart ein nicht schienengebundenes Fahrzeug mit einem Stromabnehmer zur Einspeisung elektrischer Energie aus einer wenigstens einen Fahrdraht aufweisenden Oberleitungsanlage. Der Stromabnehmer weist mindestens eine Schleifleiste mit einem Arbeitsbereich zur Kontaktierung des wenigstens einen Fahrdrahtes auf. Mit dem Stromabnehmer sind Aktormittel zum Verstellen der mindestens einen Schleifleiste gekoppelt, wobei die mindestens eine Schleifleiste waagerecht ausgerichtet und quer zu einer Fahrzeuglängsachse verstellbar ist. Durch Sensormittel wird die Lage des Fahrzeuges relativ zum wenigstens einen Fahrdraht erfasst. Eine Steuereinrichtung ist mit den Sensormitteln und den Aktormitteln verbunden und dazu ausgebildet, die Aktormittel in Abhängigkeit der von den Sensormitteln erfassten Fahrzeuglage derart anzusteuern, dass die mindestens eine Schleifleiste den Kontakt zum wenigstens einen Fahrdraht innerhalb ihres Arbeitsbereiches hält.

Bekannte Positionsbestimmungssysteme weisen fahrzeugseitige Einrichtungen, insbesondere Videokameras oder andere optische Abtasteinrichtungen, zur optischen Erfassung von Orientierungslinien eines Fahrstreifenverlaufs auf. So ist aus der Offenlegungsschrift DE 103 16 413 A1 ein Verfahren und eine Vorrichtung zur Spurführung eines Fahrzeugs bekannt, bei dem als Orientierungslinien seitliche Spurbegrenzungsmarkierungen detektiert und zur Korrektur der Bewegungsrichtung des Fahrzeugs ausgewertet werden. Demgegenüber lehrt die Offenlegungsschrift DE 10 2006 061 425 A1 eine Orientierung an sich innerhalb eines Fahrstreifens ausbildenden Spurrillen. Kamerabasierte Positionsbestimmungssysteme sind jedoch unzuverlässig oder versagen komplett, wenn Fahrbahnmarkierungen abgenutzt, Spurrillen nicht vorhanden oder beide Orientierungslinien aufgrund schwieriger Witterungsbedingungen, wie starkem Regen oder Nebel, schneebedeckter Fahrbahnen oder schwieriger Lichtverhältnisse, wie Blendung bei Nachtfahrt oder tiefstehender Sonne, nicht erfassbar sind.

Der Erfindung liegt daher die Aufgabe zugrunde ein Assistenzsystem der eingangs genannten Art bereit zu stellen, dessen Positionsbestimmungssystem zuverlässiger ist.

Die Aufgabe wird gelöst durch ein gattungsgemäßes Assistenzsystem mit den im kennzeichnenden Teil des Patentanspruches 1 angegebenen Merkmalen. Demnach weist das Positionsbestimmungssystem des Assistenzsystems eine längs zur Fahrbahn angeordnete elektrische Signalleitung auf, wobei die Signalleitung oberhalb der Fahrbahn in definierten Seitenabständen zur Fahrstreifenmitte angeordnet ist. Unter der Fahrstreifenmitte eines Fahrstreifens soll hier eine senkrecht auf der Fahrbahnoberfläche stehende Fläche verstanden werden, welche eine mittig zwischen einer linken und rechten Fahrstreifenbegrenzungslinie verlaufende Linie enthält. Die Fahrstreifenmitte ist beispielsweise im Falle eines geradlinig verlaufenden Fahrstreifens eben, im Falle eines kreisbogenförmig verlaufenden Fahrstreifens zylindrisch. Verläuft die Signalleitung in definierten - gegebenenfalls längspositionsabhängig variierenden - Seitenabständen zur Fahrstreifenmitte, so können die den jeweiligen Längspositionen zugeordneten Seitenabstände in einer Datenbank abgespeichert werden, auf welche die Auswertungseinheit bei der Ermittlung der lateralen Relativposition des Straßenfahr-zeugs zugreift. Die Signalleitung kann ein- oder mehrpolig ausgebildet sein und seitlich oder über der Fahrbahn, beispielsweise an Masten mit Quertrageinrichtungen, aufgehangen sein. Ferner weist es einen Signalgenerator zum Erzeugen und Einspeisen eines elektrischen Signals in die Signalleitung auf, wodurch ein Stromfluss in der Signalleitung erzeugt wird. Das Signal ist vorzugsweise ein Niederfrequenzsignal, dessen Frequenz im Bereich von 1 kHz bis 10 MHz liegt. Des Weiteren weist es eine fahrzeugseitige Sensoranordnung zum Erfassen einer Feldstärke und/oder einer Feldrichtung eines sich aufgrund des erzeugten Stromflusses um die Signalleitung ausbildenden elektromagnetischen Feldes auf. Die Sensoranordnung kann beispielsweise einen oder mehrere Sensoren zur Erfassung des magnetischen Feldanteils aufweisen. Außerdem weist das Positionsbestimmungssystem eine fahrzeugseitige Auswertungseinheit auf, die dazu ausgebildet ist, aus der erfassten Feldstärke und/oder Feldrichtung eine laterale Position des Straßenfahrzeugs relativ zur Signalleitung zu bestimmen. Um einen stromdurchflossenen Leiter bildet sich ein zylindersymmetrisches magnetisches Wechselfeld über dessen gesamte Länge aus, dessen Feldstärke mit zunehmendem Abstand vom Leiter abnimmt und dessen Feldrichtung gemäß der sogenannten Linke-Hand-Regel von der Stromrichtung durch den Leiter abhängt. Bei zwei- oder mehrpoligen Signalleitungen überlagern sich deren Magnetfelder in Abhängigkeit vom Abstand der Leiterpole und von der Stromrichtung durch die Leiterpole. Daraus lässt sich anhand der am Ort des Magnetfeldsensors oder an den Orten der Magnetfeldsensoren gemessenen Feldstärke und Feldrichtung deren Relativposition zur Signalleitung bestimmen. Aus den bekannten Anbringungspositionen des oder der Magnetfeldsensoren am Straßenfahrzeug kann dessen laterale Position relativ zur Signalleitung bestimmt werden. Die Auswertungseinheit ist auch dazu ausgebildet, von mehreren Fahrstreifen der Fahrbahn aus der ermittelten Relativposition einen aktuell vom Straßenfahrzeug benutzten Fahrstreifen zu ermitteln. Aus der für eine Fahrtrichtung der Fahrbahn bekannten Anzahl und Breite an Fahrstreifen kann mittels der bestimmten Relativposition auf den vom Straßenfahrzeug aktuell befahrenen Fahrstreifen geschlossen werden. Die Kenntnis über den aktuell von einem Straßenfahrzeug benutzten Fahrstreifen ist wiederum für eine Vielzahl an fahrstreifenselektiven Anwendungen des Assistenzsystems Voraussetzung. Die Auswertungseinheit ist ferner dazu ausgebildet, aus der ermittelten Relativposition einen aktuellen seitlichen Versatz des Straßenfahrzeugs aus der Fahrstreifenmitte des benutzten Fahrstreifens zu ermitteln. Die Kenntnis über den aktuell seitlichen Versatz eines Straßenfahrzeugs von der Fahrstreifenmitte des benutzten Fahrstreifens ist beispielsweise für Assistenzsystems zur Spurführung, zur Spurhaltung und zum autonomen Betreiben eines Straßenfahrzeugs anwendbar. Diese Positionsbestimmung ist unabhängig von Witterungsbedingungen, Lichtverhältnissen und Schneebelag und damit zuverlässiger als kamerabasierte Positionsbestimmungen.

In einer vorteilhaften Ausführungsform des erfindungsgemäßen Assistenzsystems ist die Signalleitung oberhalb der Fahrbahn entlang einer Fahrstreifenmitte eines Fahrstreifens angeordnet. Ist die Signalleitung einpolig und verläuft in der Fahrstreifenmitte oder ist sie zweipolig und ihre Leiterpole verlaufen symmetrisch zur Fahrstreifenmitte, so wird die Fahrstreifenmitte zur Orientierungslinie, relativ zu welcher die laterale Position des Straßenfahrzeugs bestimmt wird.

In einer weiteren vorteilhaften Ausführungsform des erfindungsgemäßen Assistenzsystems sind die Signalleitung zweipolig und der Signalgenerator zum Erzeugen und Einspeisen eines differentiellen elektrischen Signals in die beiden Leiterpole der Signalleitung ausgebildet. Bei zweipoligen Signalleitungen ist es vorteilhaft ein differentielles Signal in die Leiterpole einzuspeisen, da sich das damit ausbildende elektromagnetische Feld besonders gut zur genauen Positionsbestimmung eignet. Grundsätzlich kann das Positionsbestimmungssystem aber auch bei einpoligen Signalleitungen genutzt werden, hier wird dann gegen Erde eingespeist.

In einer weiteren vorteilhaften Ausführungsform des erfindungsgemäßen Assistenzsystems weist die Sensoranordnung mehrere, auf einem Fahrzeugdach des Straßenfahrzeugs seitlich versetzt angeordnete Magnetfeldsensoren auf. Für die Positionsbestimmung ist es vorteilhaft, wenn am Fahrzeug mit mehreren, örtlich versetzten Magnetfeldsensoren gearbeitet wird, die zum Beispiel rechts und links am Fahrzeugdach angeordnet sind.

In einer weiteren vorteilhaften Ausführungsform umfasst das erfindungsgemäße Assistenzsystem eine fahrzeugseitige Ausgabeeinheit zur visuellen und/oder akustischen Ausgabe des benutzten Fahrstreifens und/oder des seitlichen Versatzes von einer Fahrstreifenmitte des benutzten Fahrstreifens an einen Fahrer des Straßenfahrzeugs. Der benutzte Fahrstreifen kann dem Fahrer beispielsweise auf einem Bildschirm eines Fahrzeuggeräts, etwa eines Navigationsgeräts, angezeigt werden. Dem Fahrer kann beispielsweise ein Warnton ausgegeben werden, wenn der seitliche Versatz von der Fahrstreifenmitte eine voreingestellte Schwelle überschreitet.

In einer weiteren vorteilhaften Ausführungsform des erfindungsgemäßen Assistenzsystems ist der Signalgenerator dazu ausgebildet, dem elektrischen Signal längspositions- und fahrstreifenspezifische Verkehrsinformationen repräsentierende Daten aufzumodulieren, wobei die Ausgabeeinheit dazu ausgebildet ist, in Abhängigkeit der aktuellen Längsposition und des aktuell benutzten Fahrstreifens des Straßenfahrzeugs längspositions- und fahrstreifenspezifische Verkehrsinformationen an einen Fahrer des Straßenfahrzeugs auszugeben. Das elektrische Signal kann ein Trägersignal umfassen, dem mit bekannten Verfahren der Kommunikationstechnik Daten aufmoduliert werden. Die aufmodulierten Daten repräsentieren Verkehrsinformationen, die spezifisch für eine aktuelle Längsposition des Straßenfahrzeugs sind - etwa eine Geschwindigkeitsbeschränkung, eine Gebührenpflicht für die Straßenbenutzung, ein Navigationshinweis oder auch ein Vorhandensein von Fahrdrähten für eine Energieeinspeisung über einen fahrzeugseitigen Stromabnehmer -, oder die spezifisch für einen aktuell benutzten Fahrstreifen des Straßenfahrzeugs sind - etwa ein bevorstehender Entfall oder eine baustellen- oder unfallbedingte Sperrung des Fahrstreifens.

In einer weiteren vorteilhaften Ausführungsform umfasst das erfindungsgemäße Assistenzsystem ein fahrzeugseitiges Lenkbeeinflussungssystem zur automatisierten Führung des Straßenfahrzeugs innerhalb des benutzten Fahrstreifens, welchem der aktuell ermittelte seitliche Versatz des Straßenfahrzeugs von der Fahrstreifenmitte zur Bestimmung einer Lenkwinkeländerung zuführbar ist. Um das Straßenfahrzeug innerhalb eines Sollwertes für den seitlichen Versatz von der Fahrstreifenmitte zu halten, wird der aktuelle Versatz kontinuierlich ermittelt und dem Lenkbeeinflussungssystem als Istwert zugeführt. Das Lenkbeeinflussungssystem kann daraus eine erforderliche Lenkwinkeländerung ermitteln, um das Straßenfahrzeug im Fahrstreifen zu führen und zu halten.

In einer weiteren vorteilhaften Ausführungsform des erfindungsgemäßen Assistenzsystems ist die Signalleitung durch als Hin- und Rückleiter ausgebildete Fahrdrähte einer zweipoligen Oberleitungsanlage zur Energieversorgung des Straßenfahrzeugs gebildet, wobei die Fahrdrähte zur Energieeinspeisung durch einen fahrzeugseitigen Stromabnehmer kontaktierbar sind. Damit eignet sich das erfindungsgemäße Assistenzsysteme besonders für Straßenfahrzeuge mit einem Stromabnehmer, der zur Energieeinspeisung mit den als Signalleitung ausgebildeten Fahrdrähten einer Oberleitungsanlage in Schleifkontakt bringbar ist. Eine - gegebenenfalls automatisierte - Spurführung solcher Straßenfahrzeuge im elektrifizierten Fahrstreifen ist besonders unter dem Gesichtspunkt einer kontinuierlichen Kontakthaltung zu den Fahrdrähten der Oberleitungsanlage im Hinblick auf eine kontinuierliche Energieversorgung des elektrischen oder hybridelektrischen Fahrzeugantriebs von Vorteil. Die hierfür erforderliche laterale Positionsbestimmung ist dann ohne eine zusätzliche, über die Oberleitungsanlage hinausgehende Infrastrukturinstallation möglich.

Weitere Eigenschaften und Vorteile der Erfindung ergeben sich aus nachfolgender Beschreibung zweier konkreter Ausführungsbeispiele anhand der Zeichnungen, in deren
- FIG 1: ein erstes Ausführungsbeispiel des erfindungsgemäßen Assistenzsystems in Draufsicht mit einpoliger Signalleitung,
- FIG 2: ein zweites Ausführungsbeispiel des erfindungsgemäßen Assistenzsystems in Draufsicht mit zweipoliger Signalleitung, schematisch veranschaulicht sind.

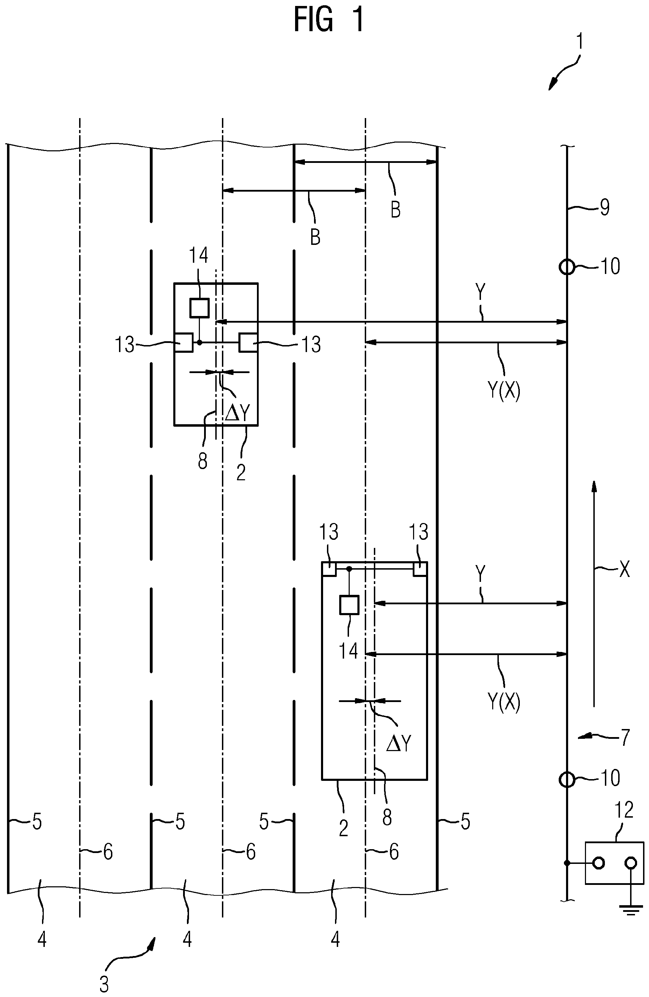

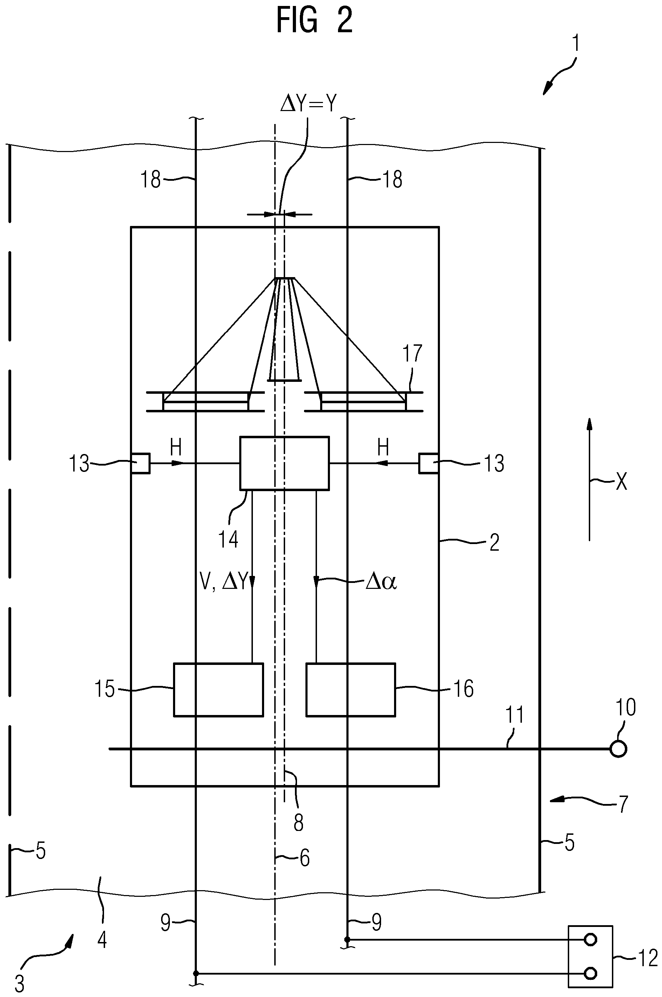

Gemäß FIG 1 und FIG 2 dient ein erfindungsgemäßes Assistenzsystem 1 der Unterstützung eines teilautomatisierten oder autonomen Betriebs von Straßenfahrzeugen 2, die auf einer ein- oder mehrstreifigen Fahrbahn 3 betrieben werden - in den dargestellten Ausführungsbeispielen auf einer dreistreifigen Autobahn mit einem linken, einem mittleren und einem linken Fahrstreifen 4 für die dargestellte Fahrtrichtung. Die Fahrstreifen 4 weisen jeweils seitliche Fahrstreifenbegrenzungslinien 5, eine mittig zwischen diesen verlaufende Fahrstreifenmitte 6 und eine Fahrstreifenbreite B, die dem Abstand der Fahrstreifenmitten benachbarter Fahrstreifen 3 entspricht, auf. Das Assistenzsystem 1 umfasst ein Positionsbestimmungssystem 7 zur Bestimmung einer lateralen Position Y eines Straßenfahrzeugs 2 auf der Fahrbahn 3. Am Straßenfahrzeug 2 dient als Bezugspunkt für dessen laterale Position Y beispielsweise eine Fahrzeuglängsmitte 8. Das Positionsbestimmungssystem 7 weist längs zur Fahrbahn 3 angeordnet gemäß FIG 1 eine einpolige Signalleitung 9 oder gemäß FIG 2 eine zweipolige Signalleitung 9 auf, die über Masten 10 oberhalb des Niveaus der Fahrbahn 2 angeordnet sind. Sie können gemäß FIG 1 seitlich der Fahrbahn 3 oder gemäß FIG 2 über an Masten 10 befestigten Quertrageinrichtungen 11 über der Fahrbahn 3 entlang einer Fahrstreifenmitte 6 verlaufen. FIG 1 zeigt beispielhaft den einpoligen Fall, in dem die Signalleitung 9 in definierten, gegebenenfalls mit der Längsposition X auf der Fahrbahn 2 variierenden, Seitenabständen Y(X) von der Fahrstreifenmitte 6 angeordnet ist. Im zweipoligen Fall gemäß FIG 2 sind der positive und negative Leiterpol der Signalleitung 9 symmetrisch zur Fahrstreifenmitte 6 angeordnet. In die Signalleitung 9 wird ein mittels eines Signalgenerators 11 des Positionsbestimmungssystems 7 erzeugtes elektrisches Signal in Form eines Niederfrequenzsignals zwischen 1 kHz und 100 MHz eingespeist, wodurch sich ein stromflussbedingtes elektromagnetisches Feld H um den oder die Signalleiter 9 ausbildet. Bei der zweipoligen Signalleitung gemäß FIG 2 kann vorteilhafterweise ein differentielles, elektrisches Signal in die Leiterpole eingespeist werden. Eine fahrzeugseitige Sensoranordnung aus ein oder mehreren Magnetfeldsensoren 13, die räumlich verteilt, beispielsweise zu beiden Seiten der Fahrzeuglängsmitte 8 auf einem Fahrzeugdach des Straßenfahrzeugs 2 angeordnet sind, ist dazu ausgebildet, einer Feldstärke und/oder einer Feldrichtung des elektromagnetischen Feldes zu erfassen.

Das Positionsbestimmungssystem 7 weist ferner eine fahrzeugseitige Auswertungseinheit 14 auf, die dazu ausgebildet ist, aus der erfassten Feldstärke und/oder Feldrichtung des elektromagnetischen Feldes H eine laterale Position Y des Straßenfahrzeugs 2 relativ zur Signalleitung 9 zu bestimmen. Aufgrund der bekannten und in der Auswertungseinheit 14 gespeicherten Seitenabstände Y(X) und Fahrstreifenbreite B wird aus der bestimmten lateralen Position Y des Straßenfahrzeugs 2 an einer Längsposition X der Fahrbahn 3 ein aktuell vom Straßenfahrzeug 2 benutzter Fahrstreifen 4 ermittelt. Außerdem ist die Auswertungseinheit 14 dazu ausgebildet, aus der ermittelten Relativposition Y einen aktuellen seitlichen Versatz ΔY des Straßenfahrzeugs 2 aus der Fahrstreifenmitte 8 des benutzten Fahrstreifens 4 zu ermitteln.

Das Assistenzsystem 1 umfasst gemäß FIG 2 eine fahrzeugseitige Ausgabeeinheit 15 zur visuellen und/oder akustischen Ausgabe des benutzten Fahrstreifens 4 und/oder des seitlichen Versatzes ΔY von einer Fahrstreifenmitte 6 des benutzten Fahrstreifens 4 an einen Fahrer des Straßenfahrzeugs **2.** Sie ist außerdem dazu ausgebildet, in Abhängigkeit der aktuellen Längsposition X und des aktuell benutzten Fahrstreifens 4 des Straßenfahrzeugs 2 längspositions- und fahrstreifenspezifische Verkehrsinformationen V an einen Fahrer des Straßenfahrzeugs 2 auszugeben. Hierzu ist der Signalgenerator 12 dazu ausgebildet, dem elektrischen Signal längspositions- und fahrstreifenspezifische Verkehrsinformationen V repräsentierende Daten aufzumodulieren, etwas vorausliegende Sperrungen oder Störungen auf dem benutzten Fahrstreifen 4 oder aktuelle Geschwindigkeitsbeschränkungen.

Des Weiteren umfasst das Assistenzsystem 1 gemäß FIG 2 ein fahrzeugseitiges Lenkbeeinflussungssystem 16 zur automatisierten Führung des Straßenfahrzeugs 2 innerhalb des benutzten Fahrstreifens **4.** Dem Lenkbeeinflussungssystem 16 wird der aktuell ermittelte seitliche Versatz ΔY des Straßenfahrzeugs 2 von der Fahrstreifenmitte 6 zur Bestimmung einer Lenkwinkeländerung Δα zugeführt.

Das Straßenfahrzeug 2 des in FIG 2 dargestellten Ausführungsbeispiels weist einen Stromabnehmer 17, der zur Einspeisung von elektrischer Energie die Fahrdrähte 18 einer zweipoligen Oberleitungsanlage kontaktiert. Zur Energieeispeisung in elektrische Verbraucher, insbesondere den Antrieb, des Straßenfahrzeugs 2 während der Fahrt wird der Stromabnehmer 17 mit den Fahrdrähten 18 in elektrischen Schleifkontakt gebracht. Die Signalleitungen 9 des erfindungsgemäßen Assistenzsystems 1 sind dabei durch die als Hin- und Rückleiter ausgebildeten Fahrdrähte 18 der Oberleitungsanlage gebildet.

## Patentansprüche

1. Assistenzsystem (1) für ein auf einer Fahrbahn (3) mit einem oder mehreren Fahrstreifen (4) benutzbares Straßenfahrzeug (2), umfassend
- ein Positionsbestimmungssystem (7) zur Bestimmung einer lateralen Position des Straßenfahrzeugs auf der Fahrbahn (3), wobei das Positionsbestimmungssystem (7) aufweist:
- eine längs zur Fahrbahn (3) angeordnete elektrische Signalleitung (9), wobei die Signalleitung (9) oberhalb der Fahrbahn (3) in definierten Seitenabständen (Y(X)) zu einer Fahrstreifenmitte des oder eines Fahrstreifen (4) (6) angeordnet ist,
- einen Signalgenerator (12) zum Erzeugen und Einspeisen eines elektrischen Signals in die Signalleitung (9), wodurch ein Stromfluss in der Signalleitung (9) erzeugt wird,
- eine fahrzeugseitige Sensoranordnung zum Erfassen einer Feldstärke und/oder einer Feldrichtung eines sich aufgrund des erzeugten Stromflusses um die Signalleitung (9) ausbildenden elektromagnetischen Feldes (H) und
- eine fahrzeugseitige Auswertungseinheit (14), die dazu ausgebildet ist,
- aus der erfassten Feldstärke und/oder Feldrichtung eine laterale Relativposition (Y) des Straßenfahrzeugs (2) relativ zur Signalleitung (9) zu bestimmen, und
- aus der ermittelten Relativposition (Y), den definierten Seitenabständen (Y(X)) und einer definierten Fahrstreifenbreite (B) von mehreren Fahrstreifen (4) der Fahrbahn (3) einen aktuell vom Straßenfahrzeug (2) benutzten Fahrstreifen (4) und einen **aktuel**len seitlichen Versatz (ΔY) des Straßenfahrzeugs (2) aus der Fahrstreifenmitte (6) des benutzten Fahrstreifens (4) zu ermitteln.

2. Assistenzsystem (1) nach Anspruch 1,
- wobei die Signalleitung (9) zweipolig und der Signalgenerator (12) zum Erzeugen und Einspeisen eines differentiellen elektrischen Signals in die beiden Leiterpole der Signalleitung (9) ausgebildet ist.

3. Assistenzsystem (1) nach einem der Ansprüche 1 oder 2,
- wobei die Sensoranordnung mehrere, auf einem Fahrzeugdach des Straßenfahrzeugs (2) seitlich versetzt angeordnete Magnetfeldsensoren (13) aufweist.

4. Assistenzsystem (1) nach einem der Ansprüche 1 bis 3, umfassend
- eine fahrzeugseitige Ausgabeeinheit (15) zur visuellen und/oder akustischen Ausgabe des benutzten Fahrstreifens (4) und/oder des seitlichen Versatzes (ΔY) von einer Fahrstreifenmitte (6) des benutzten Fahrstreifens (4) an einen Fahrer des Straßenfahrzeugs (2).

5. Assistenzsystem (1) nach einem der Ansprüche 1 bis 4,
- wobei der Signalgenerator (12) dazu ausgebildet ist, dem elektrischen Signal längspositions- und fahrstreifenspezifische Verkehrsinformationen (V) repräsentierende Daten aufzumodulieren, und
- wobei die Ausgabeeinheit (15) dazu ausgebildet ist, in Abhängigkeit der aktuellen Längsposition (X) und des aktuell benutzten Fahrstreifens (4) des Straßenfahrzeugs (2) längspositions- und fahrstreifenspezifische Verkehrsinformationen (V) an einen Fahrer des Straßenfahrzeugs (2) auszugeben.

6. Assistenzsystem (1) nach einem der Ansprüche 1 bis 5, umfassend
- ein fahrzeugseitiges Lenkbeeinflussungssystem (16) zur automatisierten Führung des Straßenfahrzeugs (2) innerhalb des benutzten Fahrstreifens (4), welchem der aktuell ermittelte seitliche Versatz (ΔY) des Straßenfahrzeugs (2) von der Fahrstreifenmitte (6) zur Bestimmung einer Lenkwinkeländerung (Δα) zuführbar ist.

7. Assistenzsystem (1) nach einem der Ansprüche 1 bis 6,
- wobei die Signalleitung (9) durch die als Hin- und Rückleiter ausgebildeten Fahrdrähte (18) einer zweipoligen Oberleitungsanlage zur Energieversorgung des Straßenfahrzeugs (2) gebildet ist, wobei die Fahrdrähte (18) zur Energieeinspeisung durch einen fahrzeugseitigen Stromabnehmer (17) kontaktierbar sind.

## Claims

1. Assistance system (1) for a road vehicle (2) which can be used on a roadway (3) having one or more lanes (4), comprising
- a position determination system (7) for determining a lateral position of the road vehicle on the roadway (3), wherein the position determination system (7) has:
- an electrical signal line (9) arranged parallel to the roadway (3), wherein the signal line (9) is arranged above the roadway (3) at defined lateral distances (Y(X)) to a lane centre (6) of the or a lane (4) (6),
- a signal generator (12) for generating and feeding an electrical signal into the signal line (9), as a result of which a current flow is generated in the signal line (9),
- an on-vehicle sensor assembly for capturing a field strength and/or a field direction of an electromagnetic field (H) forming about the signal line (9) as a result of the current flow generated and
- an on-vehicle evaluation unit (14), which is designed
- to determine, from the captured field strength and/or field direction, a lateral relative position (Y) of the road vehicle (2) relative to the signal line (9), and
- to determine, from the determined relative position (Y), the defined lateral distances (Y(X)) and a defined lane width (B) of a plurality of lanes (4) of the roadway (3), a lane (4) currently used by the road vehicle (2) and a current lateral offset (ΔY) of the road vehicle (2) from the lane centre (6) of the used lane (4).

2. Assistance system (1) according to claim 1,
- wherein the signal line (9) is two-pole, and the signal generator (12) is designed for generating and feeding a differential electrical signal into the two conductor poles of the signal line (9).

3. Assistance system (1) according to one of claims 1 or 2,
- wherein the sensor assembly has a plurality of magnetic field sensors (13) arranged laterally offset on a vehicle roof of the road vehicle (2).

4. Assistance system (1) according to one of claims 1 to 3, comprising
- an on-vehicle output unit (15) for the visual and/or acoustic output of the used lane (4) and/or the lateral offset (ΔY) from a lane centre (6) of the used lane (4) to a driver of the road vehicle (2).

5. Assistance system (1) according to one of claims 1 to 4,
- wherein the signal generator (12) is designed to modulate data representing longitudinal position- and lane-specific traffic information (V) to the electrical signal, and
- wherein the output unit (15) is designed to output longitudinal position- and lane-specific traffic information (V) to a driver of the road vehicle (2) as a function of the current longitudinal position (X) and the currently used lane (4) of the road vehicle (2).

6. Assistance system (1) according to one of claims 1 to 5, comprising
- an on-vehicle steering control system (16) for the automated guidance of the road vehicle (2) within the used lane (4), to which the currently determined lateral offset (ΔY) of the road vehicle (2) can be fed from the lane centre (6) for determining a change in steering angle (Δα).

7. Assistance system (1) according to one of claims 1 to 6,
- wherein the signal line (9) is formed by the contact wires (18) of a two-pole overhead contact line system designed as an outgoing and return conductor for supplying energy to the road vehicle (2), wherein the contact wires (18) for supplying energy can be contacted by an on-vehicle current collector (17).

## Revendications

1. Système (1) d'assistance pour un véhicule (2) routier, utilisable sur une chaussée (3) ayant une ou plusieurs files (4), comprenant
- un système (7) de détermination de position pour la détermination d'une position latérale du véhicule routier sur la chaussée (3), dans lequel le système (7) de détermination de position comporte :
- une ligne (9) électrique de signal disposée le long de la chaussée (3), dans lequel la ligne (9) de signal est disposée au-dessus de la chaussée (3), à des distances (Y(X)) latérales définies d'un milieu (6) de la file ou d'une file (4),
- un générateur (12) de signal pour la production et l'envoi d'un signal électrique dans la ligne (9) de signal, grâce à quoi un flux de courant est produit dans la ligne (9) de signal,
- un dispositif capteur embarqué sur le véhicule, pour la détection de l'intensité d'un champ et/ou d'une direction d'un champ (H) électromagnétique se formant autour de la ligne (9) de signal en raison du flux de courant produit, et
- une unité (14) d'évaluation embarquée sur le véhicule, qui est constitué,
- pour déterminer, à partir de l'intensité du champ ou de la direction du champ détectée, une position (Y) latérale relative du véhicule (2) routier par rapport à la ligne (9) de signal, et
- pour déterminer, à partir de la position (Y) relative déterminée, des distances (Y(X)) latérales définies et d'une largeur (B) définie de plusieurs files (4), une file (4) en cours d'utilisation de la chaussée (3) par le véhicule (2) routier,
et
un décalage (ΔY) latéral en cours du véhicule (2) routier hors du milieu (6) de la file (4) utilisée.

2. Système (1) d'assistance suivant la revendication 1,
- dans lequel la ligne (9) de signal est de constitution bipolaire et le générateur (12) de signal est, pour la production et l'envoi d'un signal électrique différentiel, constitué dans les deux pôles conducteurs de la ligne (9) de signal.

3. Système (1) d'assistance suivant la revendication 1 ou 2,
- dans lequel le dispositif capteur a plusieurs capteurs (13) de champ magnétique, montés décalés latéralement sur un toit du véhicule (2) ferroviaire.

4. Système (1) d'assistance suivant l'une des revendications 1 à 3, comprenant
- une unité (15) de sortie embarquée sur le véhicule pour donner visuellement et/ou acoustiquement à un conducteur du véhicule (2) routier la file (4) utilisée et/ou le décalage (ΔY) latéral du milieu (6) de la file (4) utilisée.

5. Système (1) d'assistance suivant l'une des revendications 1 à 4,
- dans lequel le générateur (12) de signal est constitué pour moduler sur le signal électrique des données représentant des informations (V) de trafic spécifiques à la position longitudinale et à la file, et
- dans lequel l'unité (15) de données est constituée pour donner au conducteur du véhicule (2) routier des informations (V) de trafic spécifiques à la position longitudinale et à la file, en fonction de la position (X) longitudinale en cours et de la file (4) en cours d'utilisation du véhicule (2) routier.

6. Système (1) d'assistance suivant l'une des revendications 1 à 5, comprenant
- un système (16) d'influence de direction embarqué sur le véhicule pour la conduite automatisée du véhicule (2) routier dans la file (4) utilisée, auquel peut être envoyé le décalage (ΔY) latéral, en cours de détermination, du véhicule (2) routier du milieu (6) de la file pour la détermination de la modification (Δα) d'un angle de direction.

7. Système (1) d'assistance suivant l'une des revendications 1 à 6,
- dans lequel la ligne (9) de signal est formée par les fils (18) de contact, constitués sous la forme de conducteurs d'aller et retour d'une installation de caténaire bipolaire pour l'alimentation en énergie du véhicule (2) routier, dans lequel les fils (18) de contact peuvent, pour l'alimentation en énergie, être mis en contact avec un appareil (17) de prise du courant embarqué sur le véhicule.
